# EUROPÄISCHE PATENTANMELDUNG

(11) **EP 1 890 373 A2**
(43) Veröffentlichungstag der Anmeldung: **20.02.2008**
(21) Anmeldenummer: 07010942.6
(22) Anmeldetag: 04.06.2007
(51) Int. Cl.: H02K 5/173

(54) **Elektromotor**

(30) Priorität: 15.08.2006 DE 202006012901 U
(71) Anmelder: ebm-papst St. Georgen GmbH & Co. KG, 78112 St. Georgen (DE)
(72) Erfinder: Hartkorn, Hans-Walter, 81243 München (DE); Kienzler, Roland, 78098 Triberg/Nussbach (DE); Mauch, Frank, 78576 Emmingen/Liptingen (DE)
(74) Vertreter: Raible, Tobias

(57) **Zusammenfassung**

Ein Elektromotor hat ein Gehäuse, in welchem ein Stator (82) befestigt ist und welches mindestens zwei Gehäuseteile (24, 86) aufweist. Ferner hat er einen auf einer Welle (34) befestigten Innenrotor (38), der mit dem Stator (82) zusammenwirkt und durch einen luftspalt (88) von diesem getrennt ist. Die Welle (34) ist mit Wälzlagern (30, 72) zu ihrer Lagerung im Gehäuse versehen, von denen ein erstes Wälzlager (30) einen Innenring (32) hat, der an einer ersten vorgegebenen Stelle auf der Welle (34) befestigt ist, welches erste Wälzlager (30) auch einen Außenring (28) hat, der in einer Ausnehmung (26) eines ersten Gehäuseteils (24) befestigt ist, und von denen ein zweites Wälzlager (72) einen Innenring (70) hat, der an einer zweiten vorgegebenen Stelle auf der Welle (34) befestigt ist und dessen Außenring (74) in einer zugeordneten Ausnehmung (96) eines zweiten Gehäuseteils (86) angeordnet und durch ein Federglied (98) in dieser Ausnehmung (96) axial in Richtung zum ersten Wälzlager (30) beaufschlagt wird, wenn das erste Gehäuseteil (24) und das zweite Gehäuseteil (86) miteinander verbunden sind.

## Beschreibung

Die Erfindung betrifft einen Elektromotor mit einem Gehäuse, in welchem ein Stator befestigt ist, sowie mit einem auf einer Welle befestigten Innenrotor, der mit dem Stator zusammenwirkt und durch einen Luftspalt von diesem getrennt ist, und mit Wälzlagern zur Lagerung der Welle im Gehäuse.

Bei Motoren dieser Art werden häufig spezielle Forderungen gestellt, die sich aus der Art des anzutreibenden Geräts ergeben und die die Montage der Lager erschweren.

Es ist eine Aufgabe der Erfindung, einen neuen Elektromotor bereit zu stellen.

Nach der Erfindung wird diese Aufgabe gelöst durch einen Elektromotor nach Anspruch 1. Dadurch, dass beide Wälzlager auf der Welle befestigt sind, wird es möglich, den Außenring des zweiten Wälzlagers von innen in die zugeordnete Ausnehmung im zweiten Gehäuseteil einzuführen, was eine preiswerte Montage ermöglicht.

Eine bevorzugte Weiterbildung der Erfindung ist Gegenstand des Anspruchs 3. Hierdurch werden die beiden Wälzlager gegeneinander verspannt, was zu einem ruhigen Lauf beiträgt, und diese Vorspannung wirkt auch einer Drehung des Außenrings des zweiten Wälzlagers in der zugeordneten Ausnehmung entgegen.

Weitere Einzelheiten und vorteilhafte Weiterbildungen der Erfindung ergeben sich aus dem im Folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: eine Darstellung einer Baueinheit mit einem Gehäuseteil 24, in welchem eine Hohlwelle 34 gelagert ist, welche einen Innenrotor trägt,
- Fig. 2: einen Schnitt, gesehen längs der Linie II-II der Fig. 1, in stark vergrößertem Maßstab,

- Fig. 3: einen Längsschnitt durch die Baueinheit der Fig. 1, welche mit einer zweiten Baueinheit 86 vereinigt ist, in welcher der Außenstator 92 des Motors befestigt ist, der mit dem Innenrotor 38 der Fig. 1 zusammenwirkt,
- Fig. 4: eine Darstellung eines Ausschnitts aus Fig. 3, bei welcher zwischen einem Lager und einer diesem zugeordneten Ausnehmung eine sogenannte Wellfeder (gewellte Feder) angeordnet ist, die beidseitig so behandelt ist, dass zumindest an ihren Auflageflächen die Reibung erhöht ist,
- Fig. 5: eine erste Variante zu Fig. 4, bei der eine Stirnseite des Lagers und ein dieser Stirnseite gegenüber liegender Gehäuseanschlag mit einem Reibbelag versehen sind, um die Reibung zwischen diesen Reibbelägen und den beiden Seiten einer dort angeordneten Wellfeder 98 zu erhöhen,
- Fig. 6: eine zweite Variante, bei der zwei Ringscheiben verwendet werden, bei denen beidseitig Maßnahmen getroffen sind, um die Reibung zu erhöhen; die eine Ringscheibe liegt zwischen dem Lager 74 und einer Wellfeder 98, und die andere liegt zwischen der Wellfeder 98 und der zugeordneten Ausnehmung 97 des Motorgehäuses,
- Fig. 7: eine Variante zu einer Einzelheit der Fig. 3,
- Fig. 8: einen Schnitt, gesehen längs der Linie VIII-VIII der Fig. 7, und
- Fig. 9: eine raumbildliche Darstellung des Elastomerrings 142 der Fig. 8.

In der nachfolgenden Beschreibung werden für gleiche oder gleich wirkende Teile dieselben Bezugszeichen verwendet, und diese Teile werden gewöhnlich nur einmal beschrieben. Die Begriffe links, rechts, oben, unten beziehen sich auf die jeweilige Figur.

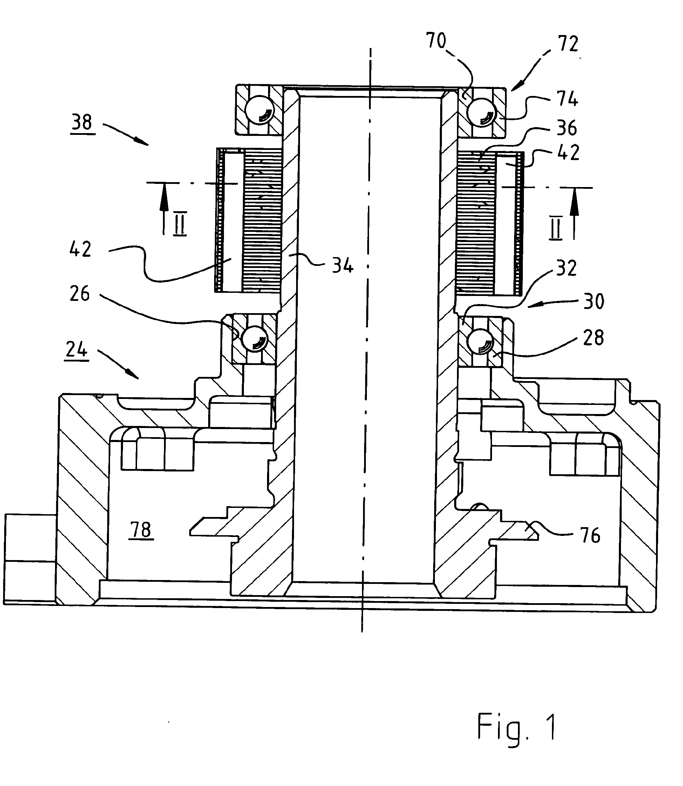

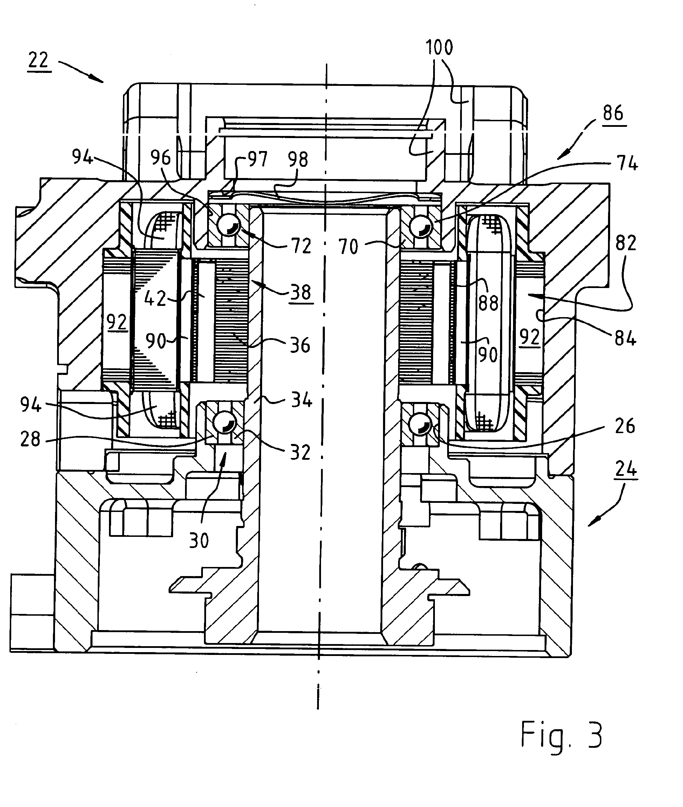

Fig. 1 zeigt in vergrößertem Maßstab den unteren Teil 24 eines in Fig. 3 dargestellten elektronisch kommutierten Motors 22. Dieser hat ein erstes Gehäuseteil 24, das etwa den Aufbau eines Lagerdeckels hat und das eine Ausnehmung 26 hat, in der der Außenring 28 eines ersten Wälzlagers 30 durch Einpressen befestigt ist. Der Innenring 32 des Wälzlagers 30 ist auf die Außenseite einer Hohlwelle 34 an einer vorgegebenen ersten Stelle aufgepresst, d.h. die Hohlwelle 34 ist relativ zum ersten Gehäuseteil 24 drehbar gelagert.

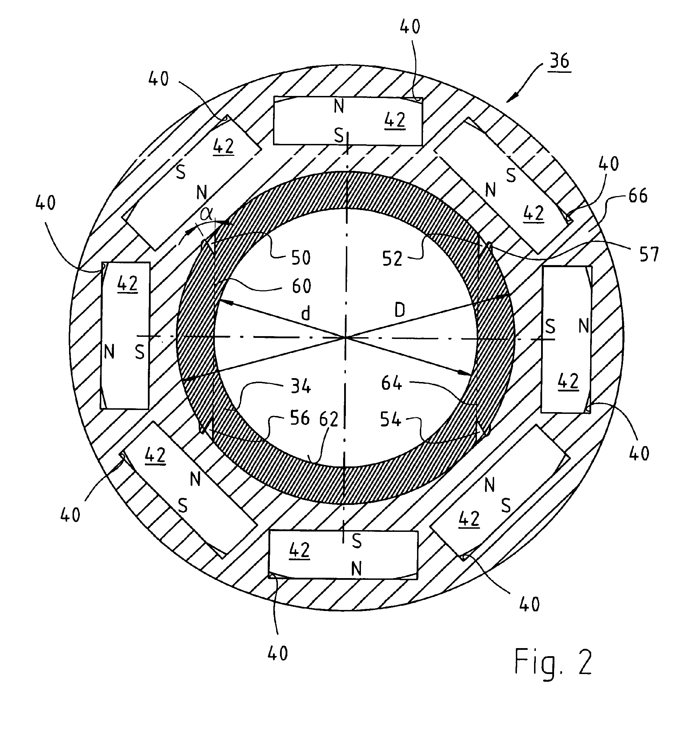

Auf den in Fig. 1 oberen Teil der Hohlwelle 34 ist das Blechpaket 36 eines Innenrotors 38 aufgepresst, in dem sich, wie in Fig. 2 dargestellt, acht Taschen 40 befinden. In diesen befinden sich insgesamt acht Permanentmagnete 42, die in der dargestellten Weise radial magnetisiert sind, d.h. der Innenrotor 38 ist bei diesem Ausführungsbeispiel achtpolig. Selbstverständlich kann er auch andere Polzahlen haben, was von der Anwendung des Motors 22 abhängt. Die Magnete 42 haben an ihrer radial äußeren Seite eine etwa dachartige Form, welche die Einführung in die Taschen 40 erleichtert und den Verlauf der Magnetflussdichte auf der Außenseite 46 des Innenrotors 38 günstig beeinflussen kann. Angestrebt wird in den meisten Fällen ein sinusförmiger Verlauf dieser Magnetflussdichte, um in Verbindung mit sinusförmigen Statorströmen ein im Wesentlichen konstantes Drehmoment eines solchen Motors zu erhalten. Man spricht dann von einem Sinusmotor.

Wie Fig. 2 zeigt, hat die Hohlwelle 34 vier in Längsrichtung der Hohlwelle verlaufende Einkerbungen 50, 52, 54, 56. Bezogen auf eine Uhr liegen sie bevorzugt etwa an folgenden Stellen:

| | |
|---|---|
| Einkerbung 50 | 10 Uhr |
| Einkerbung 52 | 2 Uhr |
| Einkerbung 54 | 4 Uhr |
| Einkerbung 56 | 8 Uhr |

Die Einkerbungen 50 und 56 liegen übereinander. Eine Linie 60, welche ihre inneren Flanken verbindet, verläuft bevorzugt etwa tangential zur Innenseite 62 der Hohlwelle 34. Dasselbe gilt für eine Linie 64, welche die Einkerbungen 52 und 54 verbindet. Die inneren Flanken der Einkerbungen 50, 56 fallen mit der Linie 60 zusammen, und die inneren Flanken der Einkerbungen 52, 54 fallen mit der Linie 64 zusammen. Die Linien 60, 64 verlaufen im Wesentlichen parallel zueinander. Die Einkerbungen 50 bis 56 selbst verlaufen wie dargestellt unter einem spitzen Winkel α, und durch sie wird ein Material-Überstand 57 in der dargestellten Weise nach außen gepresst, welcher beim Aufpressen des Blechpakets 66 eine besonders gute und dauerhafte Verbindung zwischen diesem und der Hohlwelle 34 bewirkt. Außerdem wird so der magnetische Kreis für den Fluss der Permanentmagnete 42 verbessert, der teilweise durch das Blechpaket 36 und teilweise durch die Hohlwelle 34 geht.

Wie Fig. 1 zeigt, ist oberhalb des Innenrotors 38 auf der Hohlwelle 34 an einer zweiten vorgegebenen Stelle der Innenring 70 eines Wälzlagers 72 aufgepresst. Der Außendurchmesser des Wälzlagers 72 ist kleiner als der Außendurchmesser des Innenrotors 38. Das Wälzlager 72 hat einen Außenring 74.

Der in Fig. 1 untere Teil der Hohlwelle 34 ist mit einem Flansch 76 versehen, welcher mit einer (nicht dargestellten) Vorrichtung zur Erfassung der Drehstellung des Innenrotors 38 zusammenwirkt. Zu diesem Zweck hat das erste Gehäuseteil 24 einen Ringraum 78, in dem die (nicht dargestellten) elektronischen Bauelemente des Motors 22 angeordnet werden können. Alternativ können diese auch außerhalb des Motors angeordnet sein.

Wie Fig. 3 zeigt, wird der Innenrotor 38 zusammen mit der Hohlwelle 34 in einen Außenstator 82 eingeschoben, der auf der Innenseite 84 eines zweiten Gehäuseteils 86 befestigt ist und der im montierten Zustand vom Innenrotor 38 durch einen - zylindrischen - Luftspalt 88 getrennt ist. Der Außenstator 82 hat bei diesem Ausführungsbeispiel zwölf ausgeprägte Pole 90. Auf ihm befindet sich eine dreiphasige Wicklung, die z.B. im Stern geschaltet ist. Der magnetische Rückschluss der Statorpole 90 ist mit 92 bezeichnet. Der Stator 82 ist - ebenso wie der Innenrotor 38 - geblecht. Fig. 3 zeigt Wickelköpfe 94 der Statorwicklung.

Zur Aufnahme des Außenrings 74 des zweiten Wälzlagers 72 befindet sich im zweiten Gehäuseteil 86 eine zugeordnete Ausnehmung 96, deren in Fig. 3 oberes Ende mit 97 bezeichnet ist.

In diese zugeordnete Ausnehmung 96 wird bei der Montage der Außenring 74 des zweiten Wälzlagers 72 eingeschoben. Dabei wird eine Wellfeder (gewellte Feder) 98 zusammengepresst, die sich zwischen dem Außenring 74 und dem oberen Ende 97 der Ausnehmung 96 befindet, wodurch die beiden Wälzlager 30 und 72 gegeneinander verspannt werden.

Die Wellfeder 98 erhöht auch die Reibung zwischen dem Außenring 74 und der zugeordneten Ausnehmung 96, was wünschenswert ist, damit sich der Außenring 74 dort nicht dreht.

Wird das Wälzlager 72 gedreht, zu dem der stationäre Außenring 74 gehört, so entsteht ein Reibmoment, welches auf den Außenring 74 wirkt und das Bestreben hat, diesen in der Ausnehmung 96 zu drehen. Die Größe dieses Reibmoments ist eine Funktion von
- der allgemeinen Toleranz des verwendeten Wälzlagers,
- der Lagerbauart,
- der Lagertoleranz,
- der Vorspannung, die zwischen Innen- und Außenring des Wälzlagers wirksam ist,
- der Art der Fettfüllung des Lagers, und
- von Wirbelströmen, die im Betrieb im Lager auftreten und dieses erwärmen.

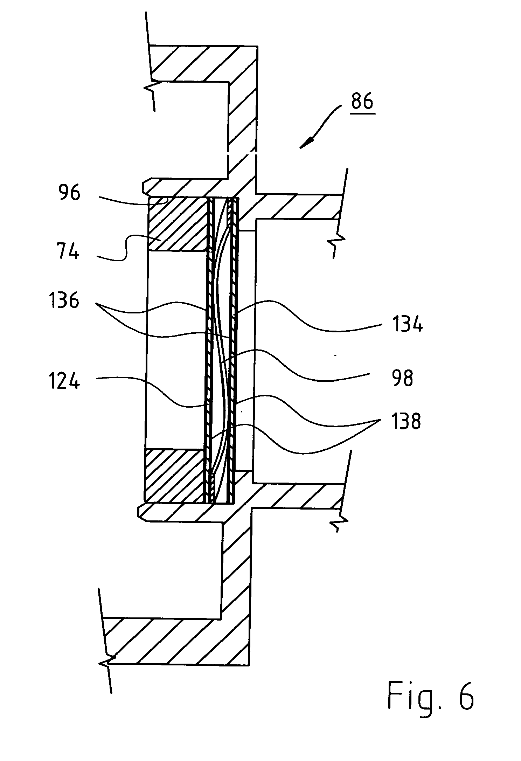

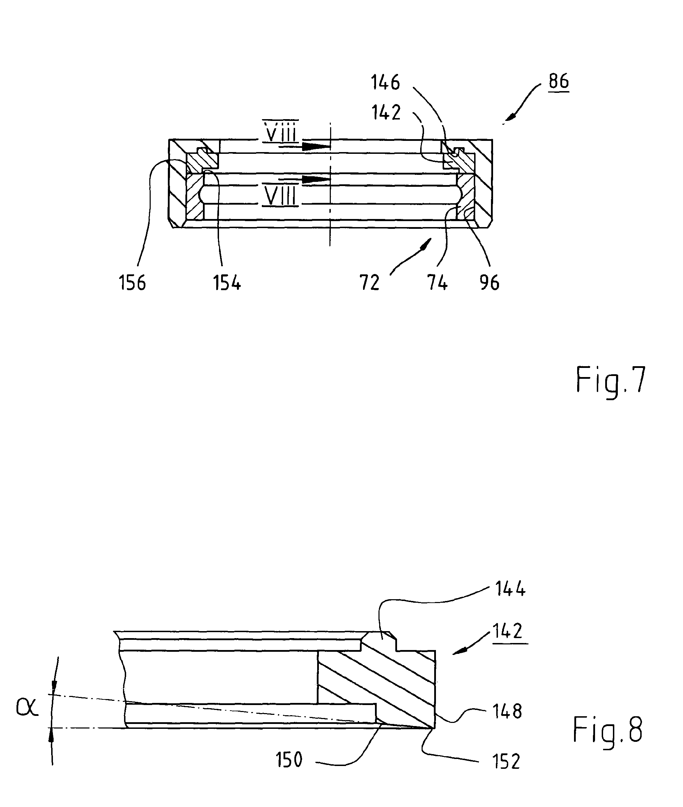

Diesem Reibmoment wirkt als Gegenmoment ein Anpress-Reibmoment entgegen, dessen Größe von der Anpresskraft der Wellfeder 98 verursacht wird und das zwischen dem Außenring 74 und dem zweiten Gehäuseteil 86 wirkt, ebenso zwischen dem Außenring 74 und der Feder 98 oder - bei Fig. 6 - zwischen dem Außenring 74 und einer ringförmigen Scheibe 124, oder schließlich bei Fig. 7 ein Anpress-Reibmoment, das von der Anpresskraft eines Elastomer-Ringes 142 verursacht ist und das zwischen dem Außenring 74 und dem zweiten Gehäuseteil 86 wirkt

Ist das bei der Drehung auf den Außenring 74 wirkende Reibmoment größer als das Reibmoment, welches durch Anpressung verursacht wird, so würde sich der Außenring 74 in der Ausnehmung 96 drehen.

Aus diesem Grund können im Rahmen der Erfindung verschiedene Maßnahmen getroffen werden, die alle darauf abzielen, das Anpress-Reibmoment zu erhöhen bzw. den Reibungsbeiwert µr zu vergrößern.

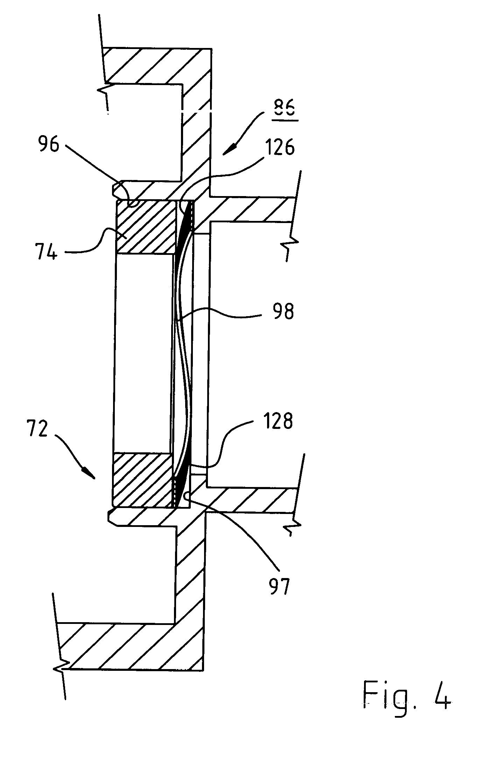

Gemäß **Fig. 4** wird auf beiden Seiten der Wellfeder 98 die - in Fig. 4 schwarz dargestellte - Oberfläche 126 (links) und 128 (rechts) so verändert, dass das Reibmoment dort erhöht wird. Hierzu gibt es verschiedene Möglichkeiten. Z.B. kann mindestens eine der Oberflächen 126, 128 mit einem Belag beschichtet sein, der die Reibung erhöht, z.B. mit einem entsprechenden dünnen Belag aus einem elastomeren Werkstoff, oder aus einer Lackierung, die Elemente enthält, welche die Reibung erhöhen, z.B. nach Art von Schmirgelpapier. Auch kann mindestens eine der Oberflächen 126, 128 aufgeraut sein, oder sie kann mit definierten Vertiefungen ("Riefen") versehen sein, oder mit Nuten, punktförmigen Vorsprüngen, etc. Auch genügt es, diese Veränderungen der Oberfläche dort vorzusehen, wo die Feder 98 gegen den Außenring 74 bzw. die Fläche 97 anliegt, also nur bereichsweise. Auch eine Beschichtung mit einem Material mit klebenden Eigenschaften ist möglich, z.B. mit einem Haftkleber.

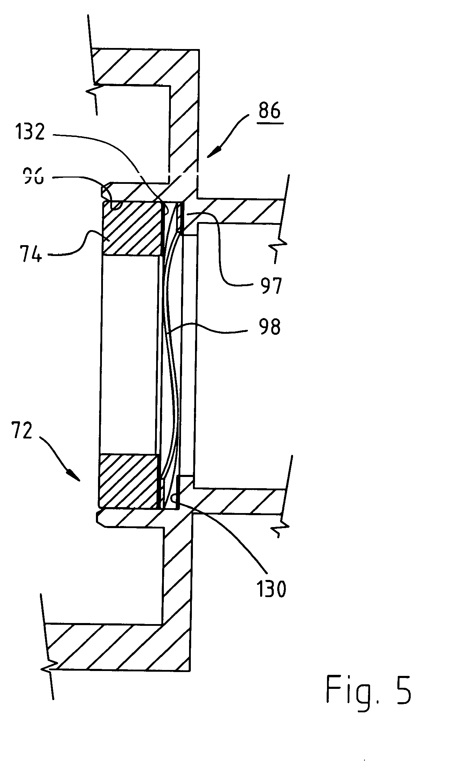

Alternativ kann gemäß **Fig. 5** eine Standard-Wellfeder 98 ohne Beschichtung verwendet werden, und stattdessen wird eine entsprechende Veränderung auf der gegenüberliegenden Oberfläche 130 der Fläche 97 und der gegenüber liegenden Oberfläche 132 des Außenrings 74 vorgenommen, also eine Beschichtung, eine mechanische Aufrauung, etc.

Gemäß **Fig. 6** können spezielle Ringscheiben 124, 134 in Verbindung mit einer Standard-Wellfeder 98 verwendet werden. Die Scheiben 124, 134 sind identisch. Links haben sie eine Oberflächenveränderung 136, und rechts eine Oberflächenveränderung 138 der zuvor beschriebenen Art, also z.B. Beschichtung mit einem Elastomer mit hoher Reibungskonstante, Lackierung mit einer Substanz nach Art von Schmirgelpapier, Aufrauung der Oberflächen 136, 138 in der beschriebenen Art, Beschichtung in einem Tauchbad, Beschichtung mit einem Haftkleber, etc.

Bei der Montage greifen das zweite Gehäuseteil 86 und das erste Gehäuseteil 24 in der in Fig. 3 dargestellten Weise ineinander, zentrieren sich gegenseitig, und werden durch (nicht dargestellte) Schraubenbolzen miteinander verbunden. Das obere Ende des zweiten Gehäuseteils 86 hat eine Öffnung 100, durch welche die Hohlwelle 34 direkt mit einem anzutreibenden Teil verbunden werden kann, z.B. dem Antrieb einer Jalousie.

**Fig. 7** zeigt eine Variante zu Fig. 3 für die axiale Verspannung des Außenrings 74 des Wälzlagers 72 in der Ausnehmung 96. Hierzu dient bei dieser Variante ein Ring 142 aus einem geeigneten Elastomer.

Der Ring 142 hat auf seiner in Fig. 7 oberen Seite einen ringförmigen Vorsprung 144 (Fig. 8), der im montierten Zustand in eine Ringnut 146 des Gehäuseteils 86 eingreift und dadurch in der Ausnehmung 96 zentriert und gehalten wird.

Der Ring 142 hat eine zylindrische Außenseite 148, mit der er im Gehäuseteil 86 geführt ist, und er hat auf seiner Unterseite eine frustokonische Ringschulter 150, deren Konuswinkel α z.B. 5° betragen kann, wobei die (imaginäre) Spitze des Hohlkegels nach oben zeigt.

Diese Schulter 150 liegt mit ihrem radial äußeren Rand 152 gegen den radial äußeren Rand 156 der oberen Seite 154 des Lagerrings 74 an.

Der übrige Aufbau ist gleich wie bei Fig. 3. Durch die Verformung des elastomeren Rings 142 bei der Montage wird eine entsprechende Kraft auf die obere Seite 154 des Lagerrings 74 erzeugt.

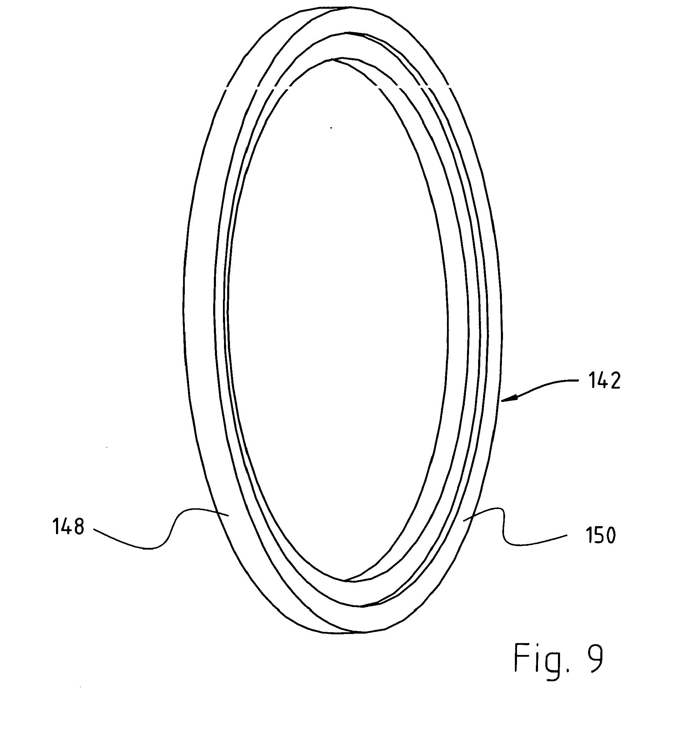

Dabei spielt es keine Rolle, ob die Seite. 150 des Rings 142 frustokonisch ist, während die obere Seite 154 des Lagerrings plan ist, oder ob umgekehrt die Seite 150 des Rings 142 plan ist, und die obere Seite 154 frustokonisch ist, wie das Fig. 7 zeigt. Wichtig ist, dass ebenso wie in Fig. 3 eine Vorspannung auf die Lager 30, 72 erzeugt wird, die einen ruhigen Lauf bewirkt und die verhindert, dass sich der Außenring 142 in der Lagerbohrung 96 dreht. Fig. 9 zeigt eine bevorzugte Ausführung des elastomeren Rings 142 in raumbildlicher Darstellung.

Naturgemäß sind im Rahmen der vorliegenden Erfindung vielfache Abwandlungen und Modifikationen möglich, und diese können auch miteinander kombiniert werden, je nach den Bedürfnissen des Einzelfalls.

## Patentansprüche

1. Elektromotor mit einem Gehäuse, in welchem ein Stator (82) befestigt ist und welches mindestens zwei Gehäuseteile (24, 86) aufweist,
ferner mit einem auf einer Welle (34) befestigten Innenrotor (38), der mit dem Stator (82) zusammenwirkt und durch einen Luftspalt (88) von diesem getrennt ist,
mit Wälzlagern (30, 72) zur Lagerung der Welle (34) im Gehäuse, von denen ein erstes Wälzlager (30) einen Innenring (32) hat, der an einer ersten vorgegebenen Stelle auf der Welle (34) befestigt ist,
welches erste Wälzlager (30) auch einen Außenring (28) hat, der in einer Ausnehmung (26) eines ersten Gehäuseteils (24) befestigt ist,
und von denen ein zweites Wälzlager (72) einen Innenring (70) hat, der an einer zweiten vorgegebenen Stelle auf der Welle (34) befestigt ist und dessen Außenring (74) in einer zugeordneten Ausnehmung (96) eines zweiten Gehäuseteils (86) angeordnet und durch ein Federglied (98; 142) in dieser Ausnehmung (96) axial in Richtung zum ersten Wälzlager (30) beaufschlagt wird, wenn das erste Gehäuseteil (24) und das zweite Gehäuseteil (86) miteinander verbunden sind.

2. Elektromotor nach Anspruch 1, bei welchem der Außendurchmesser des zweiten Wälzlagers (72) kleiner oder gleich dem Außendurchmesser des Innenrotors (38) ist.

3. Elektromotor nach Anspruch 1 oder 2, bei welchem das Federglied als gewellter Federring (98) ausgebildet ist, welcher gegen ein vom ersten Wälzlager (30) abgewandtes Ende des Außenrings (74) des zweiten Wälzlagers (72) anliegt und durch eine bei der Montage auftretende Bewegung gespannt wird, bei welcher Bewegung der Außenring (74) des zweiten Wälzlagers (72) relativ zur zugeordneten Ausnehmung (96) des zweiten Gehäuseteils (86) verschoben wird.

4. Elektromotor nach einem der vorhergehenden Ansprüche, bei welchem die Welle als Hohlwelle (34) ausgebildet ist.

5. Elektromotor nach Anspruch 4, bei welchem die Hohlwelle (34) einen Wellenabschnitt mit einem vorgegebenen Innendurchmesser (d) und einem vorgegebenen Außendurchmesser (D) aufweist, ferner eine Zahl von zwei oder mehr im Wesentlichen in Längsrichtung der Hohlwelle (34) verlaufenden Kerbungen (50, 52, 54, 56), welche am Außenumfang dieses Wellenabschnitts vorgesehen sind, wobei der Abstand eines Paares (50, 52) von benachbarten Kerbungen größer oder gleich dem Innendurchmesser (d) und kleiner als der Außendurchmesser (D) der Hohlwelle (34) an diesem Abschnitt ist.

6. Elektromotor nach Anspruch 5, bei welchem mindestens eine Kerbung einen Abschnitt aufweist, welcher im Wesentlichen senkrecht zu einer Ebene verläuft, die durch dieses Paar (50, 52) von Kerbungen verläuft.

7. Elektromotor nach Anspruch 5 oder 6, bei welchem mindestens eine Kerbung einen Abschnitt aufweist, welcher unter einem spitzen Winkel (α) zu einer Ebene (60) verläuft, die durch ein Paar von benachbarten Kerbungen (50, 56) verläuft.

8. Elektromotor nach einem der Ansprüche 5 bis 7, bei welchem auf die mit Kerbungen (50 bis 56) versehene Hohlwelle (34) der Innenrotor (36) des Elektromotors aufgepresst ist, wobei ein beim Herstellen der Kerbungen (50 bis 56) auf der Außenseite der Hohlwelle (34) beim Kerben entstandener Material-Überstand (57) verformt ist.

9. Elektromotor nach einem der Ansprüche 5 bis 8, bei welchem eine gedachte Verbindungslinie (60) zwischen einem vorgegebenen Paar von Kerbungen (50, 56) im Wesentlichen tangential zur Innenausnehmung (62) der Hohlwelle (34) verläuft.

10. Elektromotor nach Anspruch 9, bei welchem die der Längsachse der Hohlwelle (34) zugewandten Seiten dieses Paares (50, 56) von Kerbungen im Wesentlichen in der Ebene der gedachten Verbindungslinie (60) liegen.

11. Elektromotor nach Anspruch 10, bei welchem die von der Längsachse der Hohlwelle (34) abgewandten Seiten dieses Paares (50, 56) von Kerbungen jeweils unter einem spitzen Winkel (α) zu dieser Verbindungslinie (60) verlaufen.

12. Elektromotor nach einem der Ansprüche 4 bis 11, bei welchem der Innenumfang (62) der Hohlwelle (34) und ihr Außenumfang im Wesentlichen konzentrisch zueinander sind.

13. Elektromotor nach einem der vorhergehenden Ansprüche, bei welchem im Bereich des Federglieds (98; 142) mindestens ein Reibelement (126, 128; 144, 146) vorgesehen ist, das dazu ausgebildet ist, das vom Außenring (74) des zweiten Wälzlagers (72) auf das zweite Gehäuseteil (86) übertragbare Reibmoment zu erhöhen.

14. Elektromotor nach Anspruch 13, bei welchem das Federglied (98; 142) in der Weise verändert ist, dass seine mit dem Außenring (74) und/oder der zugeordneten Ausnehmung (96, 97; 146) in Kontakt kommende Seite (126, 128; 144) einen erhöhten Reibungsbeiwert (µr) aufweist.

15. Elektromotor nach Anspruch 14, bei welchem das Federglied als Spannfeder (98; 142) ausgebildet und mindestens bereichsweise mit einem Belag (126, 128) beschichtet ist, der einen erhöhten Reibungsbeiwert (µr) aufweist.

16. Elektromotor nach Anspruch 15, bei welchem der Reibungsbeiwert der Spannfeder (98; 142) mindestens bereichsweise durch mechanische Bearbeitung erhöht ist.

17. Elektromotor nach Anspruch 15 oder 16, bei welchem die der Spannfeder (98; 142) zugewandte Stirnseite des Außenrings (74) und/oder die der Spannfeder (98; 142) zugewandte Seite (146)der zugeordneten Ausnehmung (96, 97) in der Weise verändert ist, dass sie einen erhöhten Reibungsbeiwert (µr) aufweist.

18. Elektromotor nach einem der Ansprüche 13 bis 17, bei welchem in der zugeordneten Ausnehmung mindestens eine Unterlegscheibe (124, 134) vorgesehen ist, bei der wenigstens eine der Seiten (136) in der Weise verändert ist, dass sie einen erhöhten Reibungsbeiwert (µr) aufweist (Fig. 6).

19. Elektromotor nach einem der Ansprüche 13 bis 18, bei welchem zur Erhöhung des Reibungsbeiwerts (µr) ein Belag (126, 128; 132, 136; 138) aus einem elastomeren Werkstoff vorgesehen ist.

20. Elektromotor nach Anspruch 19, bei welchem zur Erhöhung des Reibungsbeiwerts (µr) ein Belag (126, 128; 132, 136; 138) vorgesehen ist, welcher TPE enthält.
